# EUROPÄISCHE PATENTSCHRIFT

(11) **EP 3 817 952 B1**
(45) Veröffentlichungstag und Bekanntmachung des Hinweises auf die Patenterteilung: **29.06.2022**
(21) Anmeldenummer: 19739225.1
(22) Anmeldetag: 03.07.2019
(51) Int. Cl.: B60R 22/12, D03D 1/00, D03D 3/02, D03D 11/02

(54) **GURTBAND FÜR EINE SICHERHEITSGURTEINRICHTUNG EINES KRAFTFAHRZEUGES**
BELT STRAP FOR A SAFETY BELT DEVICE OF A MOTOR VEHICLE
SANGLE DE CEINTURE POUR CEINTURE DE SÉCURITÉ D'UN VÉHICULE AUTOMOBILE

(30) Priorität: 03.07.2018 DE 102018210890
(43) Veröffentlichungstag der Anmeldung: 12.05.2021
(73) Patentinhaber: Autoliv Development AB, 447 83 Vårgårda (SE)
(72) Erfinder: WANG, Tommy, Shanghai, 200000 (CN); CHEN, Bob, 215400 Taicang, Jiangsu (CN); TAO, Raphael, Suzhou, Taicang Jiangsu, 215400 (CN); WELZ, Willi, 5464 Veghel (NL); GAN, Frank, 215400 Taicang, Jiangsu (CN); MUELLER, Kai-Stephan, 25524 Oelixdorf (DE); VAN HELVOORT, Chris, 5282 Boxtel (NL); DREWS, Victoria, 22303 Hamburg (DE)
(74) Vertreter: Müller Verweyen
(86) Internationale Anmeldenummer: PCT/EP2019/067848
(87) Internationale Veröffentlichungsnummer: WO 2020/007912

(56) Entgegenhaltungen:
- EP-A1- 2 832 907
- WO-A1-2016/071528
- WO-A2-01/44547
- DE-A1- 19 932 940
- DE-U1-202017 105 538

## Beschreibung

Die vorliegende Erfindung betrifft ein Gurtband für eine Sicherheitsgurteinrichtung eines Kraftfahrzeuges mit den Merkmalen des Oberbegriffs von Anspruch 1.

Gurtbänder in Sicherheitsgurteinrichtungen von Kraftfahrzeugen dienen im Allgemeinen dazu, die Insassen in den Kraftfahrzeugen in einem Unfall zurückzuhalten, um schwerere Verletzungen möglichst zu vermeiden. Die Sicherheitsgurteinrichtungen weisen unter anderem einen fahrzeugfest befestigten Gurtaufroller mit einer Gurtspule auf, auf der ein Ende des Gurtbandes aufwickelbar ist. Das andere Ende des Gurtbandes ist entweder über eine Gurtzunge in einem fahrzeugfest befestigten Gurtschloss verriegelbar oder über einen Endbeschlag ebenfalls permanent am Fahrzeug befestigt. Sofern das andere Ende über einen Endbeschlag fahrzeugfest befestigt ist, weist die Sicherheitsgurteinrichtung ferner eine auf dem Gurtband verschieblich geführte Gurtzunge auf, welche in einem fahrzeugfesten Gurtschloss z.B. zu einer Dreipunktgeometrie des Gurtbandes verriegelbar ist.

Die Gurtbänder selbst müssen aufgrund ihrer Aufgabe zur Rückhaltung des Insassen verschiedene Anforderungen an die Zugfestigkeit, die Oberflächenbeschaffenheit, die Beschaffenheit der Kanten und dergleichen erfüllen.

Ferner sind moderne Kraftfahrzeuge mit einer Vielzahl von elektronischen Bauteilen, wie Sensoren, Aktuatoren, Bildschirmen, Akustikeinheiten, Heiz- und Kühleinrichtungen etc. versehen, deren Anzahl mit zunehmender Automatisierung der Kraftfahrzeuge mit ihren Antriebseinrichtungen, Steuereinrichtungen und Komforteinrichtungen erwartungsgemäß noch weiter ansteigen wird. Ferner müssen diese Einrichtungen durch elektrische Leitungen miteinander und mit entsprechenden Energiequellen und Steuereinrichtungen verbunden werden. Sofern diese elektronischen Bauteile und Leitungen Teil der Sicherheitsgurteinrichtung sind, müssen diese entsprechend an der Sicherheitsgurteinrichtung angeordnet werden, ohne den Gebrauch oder die Funktionsfähigkeit der Sicherheitsgurteinrichtungen zu beeinträchtigen.

Die WO2016/071528A1 offenbart ein Gurtband nach dem Oberbegriff von Anspruch 1.

Aus der DE 10 2011 009 318 A1 ist es bereits bekannt, das Gurtband mit einem sich in Längsrichtung des Gurtbandes erstreckenden Schlauchabschnitt zu versehen, in den die elektronischen Bauteile einführbar sind.

Nähere Angaben, wie der Schlauchabschnitt in dem Gurtband hergestellt ist, sind der Druckschrift nicht zu entnehmen.

Aus der Druckschrift EP 1141 455 B1 ist ferner ein aufblasbarerer, mehrlagiger, gefalteter Sicherheitsgurt mit einem Mittenabschnitt und zwei Randabschnitten bekannt, welcher in einem Unfall durch einen von einem Gasgenerator freigesetzten Gasstrom zu einem Schlauch mit einem vergrößerten Durchmesser zur Verringerung der Insassenbelastung im Rückhaltefall aufblasbar ist. Der Sicherheitsgurt wird in zwei Lagen gewebt, welche im Bereich der Übergänge der Abschnitte und im Bereich der äußeren Ränder miteinander verwebt sind. Nach dem Weben werden die Randabschnitte des Sicherheitsgurtes in einer Z-Form auf den Mittenabschnitt gefaltet. Anschließend wird der Sicherheitsgurt umgestülpt und auf links gefaltet, wodurch die Innenseiten des Mittenabschnittes zur Außenseite gelangen und die Randabschnitte in einem Hohlraum zwischen den beiden Lagen des Mittenabschnittes zu liegen kommen. Dabei wird der Sicherheitsgurt gleichzeitig auf die Breite eines herkömmlichen Sicherheitsgurtes von ca. 46 oder 47 mm reduziert. Ferner bilden die Verbindungen zwischen den beiden Lagen des Mittenabschnittes jeweils die Randabschnitte des gefalteten Sicherheitsgurtes, welche zur Entfaltung des Sicherheitsgurtes in einem ersten Schritt aufreißen, bevor sich die Randabschnitte durch den eintretenden Gasstrom entfalten können. Der aufblasbare Sicherheitsgurt ist nicht dazu vorgesehen, dass elektronische Bauteile in den Hohlraum eingeführt werden. Ferner entsteht der vergrößerte Hohlraum erst durch das Entfalten des Sicherheitsgurtes und ist im Sinne einer größtmöglichen Reduzierung der Insassenbelastung möglichst groß mit einem derartigen Volumen bemessen, welches allein zur Aufnahme der elektronischen Bauteile viel zu groß wäre. Vor dem Aufblasen des Sicherheitsgurtes ist der Hohlraum mit den darin angeordneten Randabschnitten vollständig gefüllt, so dass es auch aus diesem Grunde nicht vorgesehen ist und auch nur schwer zu realisieren wäre, dort zusätzliche elektrische Bauteile oder Leitungen anzuordnen.

Vor diesem Hintergrund liegt der Erfindung die Aufgabe zugrunde, ein Gurtband für eine Sicherheitsgurteinrichtung eines Kraftfahrzeuges mit einem Hohlraum zur Aufnahme von elektronischen Bauteilen und Leitungen bereitzustellen, welches möglichst einfach aufgebaut sein soll und zudem kostengünstig herzustellen sein soll.

Erfindungsgemäß wird zur Lösung der Aufgabe ein Gurtband mit den Merkmalen von Anspruch 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass der Hohlraum durch zwei Gewebelagen gebildet ist, welche in den äußeren Randabschnitten durch einen oder mehrere parallel zu der Längsrichtung des Gurtbandes verlaufenden Bindungsfaden/verlaufende Bindungsfäden miteinander verbunden sind.

Durch die erfindungsgemäße Lösung kann der Hohlraum bereits beim Weben des Gurtbandes mit hergestellt werden. Dabei wird das Gurtband in seinem Grundaufbau in zwei voneinander unabhängigen Gewebelagen gewebt, welche nur in den Randabschnitten durch die Bindungsfäden miteinander verbunden sind. Dabei kann der zur Verbindung der beiden Gewebelagen in den Randabschnitten vorgesehene Bindungsfaden beim Weben gleich mit eingewebt werden, so dass die Verbindung der Gewebelagen beim Weben direkt verwirklicht wird, und es entfällt ein weiterer gesonderter Arbeitsschritt zum Verbinden der Gewebelagen. Da die Bindungsfäden lediglich der Verbindung der beiden Gewebelagen dienen, die im Rückhaltefall wirkenden Zugkräfte aber nach wie vor von den Kettfäden aufgenommen werden, reicht es aus, wenn die Bindungsfäden allein unter dem Gesichtspunkt einer zuverlässigen Verbindung der beiden Gewebelagen ausgelegt und angeordnet werden. Dabei können als Auslegungsparameter für die Verbindung der Gewebelagen die Garnstärke der Bindungsfäden, der Werkstoff der Bindungsfäden und auch die Anzahl der Bindungsfäden genutzt werden.

Weiter wird vorgeschlagen, dass das Gurtband eine Breite von 40 bis 50 mm, bevorzugt von 46 oder 47 mm aufweist, und die Randabschnitte, in denen die Gewebelagen durch die Bindungsfäden miteinander verbunden sind, eine Breite von jeweils wenigstens 2 mm, bevorzugt von wenigstens 4 mm aufweisen. Die vorgeschlagene Breite des Gurtbandes entspricht der Standardbreite von Gurtband. Durch die vorgeschlagene Bemessung der Randabschnitte kann verhindert werden, dass das Gurtband unter Einwirkung von Scherkräften seine flächige Ausbildung verliert, und dass sich dadurch Falten in dem Gurtband bilden. Insbesondere kann dadurch verhindert werden, dass sich das Gurtband mit den beiden Gewebelagen unter einem seitlichen Abrollen der Randabschnitte in Längsrichtung verdrillt oder verwindet. Dabei kann die Breite der Randabschnitte und die damit verbundene flächige Verbindung der Gewebelagen in den Randabschnitten insbesondere durch eine entsprechende Wahl der Anzahl und Anordnung der Bindungsfäden erreicht werden.

Erfindungsgemäß werden die Gewebelagen durch eine Vielzahl von Kettfäden und Schussfäden gebildet .

Die Kettfäden verlaufen in Richtung der Längsrichtung des Gurtbandes und werden durch die Schussfäden zu dem flächigen Gewebe miteinander verbunden. Dabei bilden die Kettfäden bei dem fertig gewebten Gewebe die Oberflächen der Gewebelagen, während die Schussfäden zwischen den Kettfäden verlaufen und von außen bei einem entsprechend dichten Gewebe nicht zu erkennen sind. Die Kettfäden sind entsprechend zugfest ausgebildet und dienen der Aufnahme der Zugkräfte in Längsrichtung des Gurtbandes, während die Schussfäden feiner ausgebildet sind und dem Zusammenhalt der Kettfäden dienen.

Der Bindungsfaden ist dabei bevorzugt in einer 2/2-Bindung mit den Schussfäden der beiden Gewebelagen verwebt, wodurch sich eine gleichmäßige Verbindung der Gewebelagen mit einer möglichst homogenen, glatten Oberflächenstruktur erzielen lässt. Unter einer 2/2-Bindung soll dabei eine Bindung verstanden werden, in der der Bindungsfaden durch einen Seitenwechsel in Bezug zu den beiden Webfächern der beiden Gewebelagen während des Webens periodisch immer an zwei aufeinanderfolgenden Schussfäden an einer Seite und an den darauf folgenden zwei Schussfäden an der anderen Seite des Gurtbandes angeordnet ist. Die jeweils unmittelbar benachbarten Bindungsfäden oder auch mehrere benachbart angeordnete Gruppen von Bindungsfäden können dabei bevorzugt so ausgerichtet sein, dass sie beim Weben jeweils auf den gegenüberliegenden Seiten des Webfaches und damit an gegenüberliegenden Seiten der Schussfäden angeordnet sind. Die Schussfäden dienen, wie bereits oben ausgeführt wurde, dem Verbund der Kettfäden in den Gewebelagen. Damit werden die Kettfäden aufgrund der durch die Bindungsfäden geschaffenen Verbindung der Schussfäden der unterschiedlichen Gewebelagen durch die Bindungsfäden mittelbar auch verbunden, so dass sich ein fester Verbund der beiden ansonsten voneinander unabhängigen Gewebelagen in den Randabschnitten ergibt.

Erfindungsgemäß werden die Kettfäden in einer 5/1/1-Bindung mit den Schussfäden verbunden .

Unter einer 5/1/1-Bindung wird in Anlehnung an die obige Definition der Bindung des Bindungsfadens eine Bindung der Kettfäden mit den Schussfäden verstanden, bei der die Kettfäden in einer periodischen Abfolge während fünf aufeinanderfolgender Schussfäden an einer Seite des Webfaches einer Gewebelage angeordnet sind, dann für einen nachfolgenden Schussfaden die Seite des Webfaches wechseln, anschließend für einen weiteren Schussfaden die Seite des Webfaches nochmals wechseln, bevor sie für die Wiederholung des Ablaufes für die nächsten fünf Schussfäden wieder auf der anderen Seite des Webfaches angeordnet sind. Durch die vorgeschlagene Bindung der Kett- und Schussfäden kann eine haptisch- und reibungsoptimierte Oberfläche geschaffen werden. Ferner können dadurch jeweils Gewebelagen geschaffen werden, welche durch den Bindungsfaden mit der vorgeschlagenen Bindung besonders gut unter Bildung eines Hohlraumes miteinander verbunden werden können.

Weiter können die beiden Gewebelagen in einem oder mehreren zwischen den Randabschnitten angeordneten Verbindungsabschnitten unter Bildung von zwei oder mehr voneinander getrennten Hohlräumen miteinander verbunden sein. Durch die vorgeschlagenen zusätzlichen Verbindungsabschnitte kann die Verbindung der Gewebelagen einerseits weiter verbessert werden, und andererseits können mehrere voneinander getrennte Hohlräume, z.B. zwecks einer bewusst getrennten Führung von Leitungen oder einer getrennten Anordnung von elektronischen Bauteilen, geschaffen werden.

Die Erfindung wird im Folgenden anhand bevorzugter Ausführungsformen unter Bezugnahme auf die beigefügten Figuren erläutert. Dabei zeigt
- Fig. 1: ein erfindungsgemäßes Gurtband in Draufsicht und Schnittdarstellung, und
- Fig. 2: einen Längsschnitt durch einen Randabschnitt des Gurtbandes in einer vergrößerten, auseinander gezogenen Darstellung, und
- Fig. 3: eine Schnittdarstellung des Gurtbandes unter Einwirkung von Scherkräften.

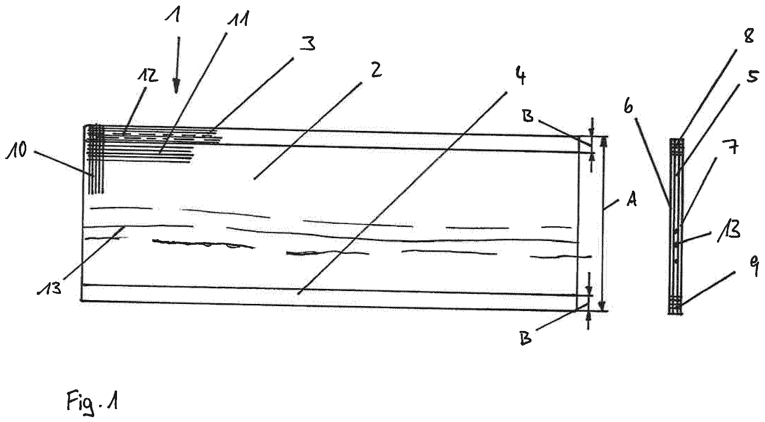

In der Figur 1 ist ein erfindungsgemäßes Gurtband 1 in Draufsicht und in der rechten Darstellung in Schnittdarstellung zu erkennen. Das Gurtband 1 weist zwei Gewebelagen 6 und 7 auf, welche in einem Mittenabschnitt 2 nicht miteinander und in zwei äußeren Randabschnitten 3 und 4 miteinander verbunden sind. Das Gurtband 1 weist eine Breite A von 46 oder 47 mm auf, während die Randabschnitte 3 und 4 jeweils eine Breite B von 2 mm, bevorzugt von 4 mm aufweisen.

Das Gurtband 1 weist eine Vielzahl von in Längsrichtung des Gurtbandes 1 verlaufenden Kettfäden 11 auf, welche mit senkrecht zu diesen verlaufenden Schussfäden 10 zu den Gewebelagen 6 und 7 verwebt sind. Dabei weist jede der Gewebelagen 6 und 7 voneinander getrennte Kettfäden 11 und Schussfäden 10 auf, so dass sie voneinander unabhängige Gewebelagen 6 und 7 bilden. In den Randabschnitten 3 und 4 sind die Gewebelagen 6 und 7, wie nachfolgend noch beschrieben wird, miteinander verbunden, so dass zwischen den Gewebelagen 6 und 7 ein Hohlraum 5 gebildet wird, der zu den Randseiten hin durch die Verbindung in den Randabschnitten 3 und 4 begrenzt ist. In dem Hohlraum 5 sind drei elektrische Leitungen 13 angeordnet, welche z.B. zu einer elektrischen Verbindung von Sensoren oder als Signalleitungen für Aktuatoren der Sicherheitsgurteinrichtung oder auch anderer Einrichtungen in der Umgebung der Sicherheitsgurteinrichtung dienen können. Ferner können in dem Hohlraum 5 auch weitere elektronische Bauteile wie z.B. kleinere Steuer- oder Speichereinheiten, einfache Schalter, akustische Wiedergabeeinrichtungen, Heizeinrichtungen oder dergleichen angeordnet sein.

Die beiden Gewebelagen 6 und 7 sind durch in den Randabschnitten 3 und 4 vorgesehene Bindungsfäden 12 miteinander verwebt, welche in den Randabschnitten 3 und 4 Verbindungsabschnitte 8 und 9 der Gewebelagen 6 und 7 bilden. Die Bindungsfäden 12 müssen nicht über die gesamte Breite der Randabschnitte 3 und 4 vorgesehen sein. Sofern z.B. eine besondere Bindung im Bereich der Kante des Gurtbandes 1 zur Verwirklichung einer möglichst weichen Kante vorgesehen ist, können die Bindungsfäden 12 in den äußersten Randbereichen der Randabschnitte 3 und 4 auch weggelassen werden, sofern dies für die Verbindung der Gewebelagen 6 und 7 nicht von Nachteil ist.

Die Breite B der Randabschnitte 3 und 4 ist bewusst mit 2 mm so groß gewählt, dass die Verbindung in den Randabschnitten 3 und 4 dem gesamten Gurtband 1 eine flächige Ausbildung aufzwingt. Dabei kann dieser Effekt noch vergrößert werden, indem die Breite der Randabschnitte 3 und 4 noch größer z.B. mit einer Breite B von 4 mm oder noch größer gewählt wird. Dadurch wird verhindert, dass sich das Gurtband 1 bei der Einwirkung von Querkräften unter einem Abrollen der Kanten der Randabschnitte 3 und 4 um seine Längsachse verdrillt oder verwindet. Sofern die sinnvoll ist, können die Randabschnitte 3 und 4 in der Breite B auch noch größer bemessen werden, wodurch die Größe des Hohlraumes 5 aber verkleinert wird. Dies kann z.B. sinnvoll sein, wenn der Hohlraum 5 bewusst schmaler, in Form eines Kanals verwirklicht sein soll, wodurch die Anordnung und der Verlauf der Leitungen in dem Gurtband 1 vorgegeben bzw. definiert werden kann.

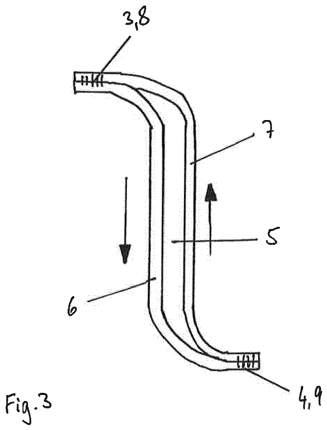

In der Figur 3 ist das Gurtband 1 in einer Schnittdarstellung unter Einwirkung von in Pfeilrichtung wirkenden Scherkräften zu erkennen. Durch die Einwirkung der Scherkräfte werden die Gewebelagen 6 und 7 quer zu ihrer Längserstreckung gegeneinander verschoben, so dass auf die Randabschnitte 3 und 4 bzw. die Verbindungsabschnitte 8 und 9 von einer der Gewebelagen 6 und 7 jeweils eine Druckkraft ausgeübt wird, während von der jeweils anderen Gewebelage 6 und 7 eine Zugkraft ausgeübt wird. Diese Kräfteverhältnisse führen dazu, dass die Randabschnitte 3 und 4 seitlich abgelenkt werden, wie dies in der Figur 3 zu erkennen ist.

Würden die Randabschnitte 3 und 4 nicht erfindungsgemäß verbunden sein, so würden die randseitigen Verbindungsstellen der Gewebelagen 6 und 7 dabei in Umfangsrichtung abrollen, und das Gurtband 1 würde sich um seine Längsachse verdrillen bzw. verwinden, wodurch wiederum die flächige Ausbildung des Gurtbandes verloren gehen und der Tragekomfort beeinträchtigt werden würde. Aufgrund der erfindungsgemäßen Verbindung der Gewebelagen 6 und 7 in den Randabschnitten 3 und 4 über eine Breite B von wenigstens 2 mm, bevorzugt von wenigstens 4 mm wird verhindert, dass die Verbindung in Umfangsrichtung abrollt. Dem Gurtband 1 wird in den Randabschnitten 3 und 4 praktisch eine flächige Ausbildung aufgezwungen. Ferner bewirkt das Verhindern des Abrollens der Randabschnitte 3 und 4 im Umkehrschluss, dass diese bei einem Wegfall der Scherkräfte Rückstellkräfte auf das Gurtband 1 und die Gewebelagen 6 und 7 ausüben und dadurch das Gurtband 1 und die Gewebelagen 6 und 7 selbsttätig wieder in die flächige Ausrichtung zwingen, welche in der rechten Dartstellung der Figur 1 dargestellt ist.

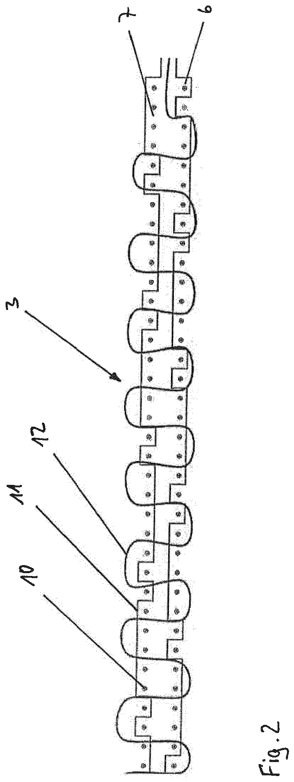

In der Figur 2 ist das Gurtband 1 in einem Schnitt durch den Randabschnitt 3 zu erkennen. Die beiden Gewebelagen 6 und 7 sind in einer 5/1/1-Bindung gewebt. Der Wechsel der Kettfäden 11 von einer Seite zu der anderen Seite des Webfaches in dem Webstuhl einer Gewebelage 6 oder 7 ist so gewählt, dass sie in einer periodischen Abfolge zuerst auf einer Seite des Webfaches angeordnet sind, während fünf Schussfäden 10 durch das Webfach geschossen werden. Anschließend wechseln die Kettfäden 11 auf die andere Seite des Webfaches für den Schuss eines nächsten Schussfadens 10. Nachfolgend werden die Kettfäden 11 für einen weiteren Schuss wieder auf die andere Seite des Webfaches bewegt, bevor sie zur Wiederholung des Webrhythmuses für die nachfolgenden fünf Schussfäden 10 der nächsten Periode wieder auf die andere Seite des Webfaches wechseln. Damit ergibt sich ein Rhythmus mit jeweils fünf Schussfäden 10, die die Kettfäden 11 zu einer Seite hin abdecken, anschließend einem Schussfaden 10, der die Kettfäden 11 zu der anderen Seite hin abdeckt, und anschließend wieder einem Schussfaden 10, der die Kettfäden 11 zu der anderen Seite hin abdeckt, bevor der Rhythmus wiederholt wird, wobei die nächste Periode mit jeweils fünf Schussfäden 10 beginnt, die die Kettfäden 11 im Vergleich zu dem vorangegangenen Rhythmus auf der anderen Seite der Kettfäden 11 abdecken. Die Kettfäden 11 einer Gewebelage 6 oder 7 werden in Bündeln (Multifilamente) oder einzeln als Monofilamente gewebt.

Dabei wird ein erstes Bündel aus Kettfäden 11 in dem beschriebenen Rhythmus gewebt, während ein benachbartes zweites Bündel aus Kettfäden 11 in einem identischen aber versetzten Rhythmus gewebt wird. Ferner werden die Kettfäden 11 der beiden unterschiedlichen Gewebelagen 6 und 7 in demselben beschriebenen Webrhythmus allerdings versetzt zueinander gewebt, wie in der Figur 2 zu erkennen ist.

Die beiden so voneinander getrennt gewebten Gewebelagen 6 und 7 werden in dem dargestellten Randabschnitt 3 durch wenigstens einen Bindungsfaden 12 miteinander verbunden. Der Bindungsfaden 12 wird in einer 2/2-Bindung mit den Schussfäden 10 der beiden Gewebelagen 6 und 7 verwebt, d.h. der Bindungsfaden 12 wird für zwei Schussfäden 10 der beiden Gewebelagen 6 und 7 auf einer Seite des Webfaches einer der Gewebelagen 6 oder 7 geführt und wechselt dann auf die gegenüberliegende Seite des Webfaches der anderen Gewebelage 6 oder 7.

Damit verläuft der Bindungsfaden 12 in dem fertig gewebten Gurtband 1 periodisch für zwei Schussfäden 10 an der Unterseite der in der Darstellung unteren Gewebelage 6 und für die nächsten zwei Schussfäden 10 an der Oberseite der in der Darstellung oberen Gewebelage 7. Er verläuft damit periodisch wechselnd an den beiden freien Oberflächen der Gewebelagen 6 und 7 und wechselt dabei die Seite, indem er durch die Schussfäden 10 beider Gewebelagen 6 und 7 hindurch auf die andere freie Oberfläche tritt. Der Bindungsfaden 12 kann ebenfalls in Bündeln als Multifilamente verwebt werden, wobei außerdem auch mehrere Bündel oder einzelne Bindungsfäden 12 vorgesehen sein können, die jeweils zueinander versetzt gewebt werden können. Dies ist insbesondere zur Verwirklichung der Breite B der Randabschnitte 3 und 4 sinnvoll, um bei der Breite B gleichzeitig eine entsprechend flächige Ausbildung der Randabschnitte 3 und 4 zu verwirklichen.

Grundsätzlich können sich die Bindungsfäden 12 in dem Material, der Garnstärke, der Farbe, der Dehnung und in verschiedenen anderen Eigenschaften von den Kettfäden 11 unterscheiden, da sie zur Verwirklichung der Verbindung grundsätzlich eine andere Aufgabe als die Kettfäden 11 haben. Die Bindungsfäden 12 müssen z.B. keine Zugkräfte im Lastfall aufnehmen, so dass sie aus einem Garn mit einer geringeren Garnstärke als die Kettfäden 11 gebildet sein können.

In der Darstellung der Figur 2 wurden die Gewebelagen 6 und 7, in dem Verlauf der Kettfäden 11, der Schußfäden 10 und des Bindungsfadens 12 auseinandergezogen, mit jeweils in einer Ebene angeordneten Schussfäden 10 der beiden Gewebelagen 6 und 7 dargestellt, damit das Webmuster besser zu erkennen ist. In dem fertig gewebten Gurtband 1 liegen die Kettfäden 11, die Schussfäden 10 und der Bindungsfaden 12 jedoch erheblich dichter zusammen in einem flächigen Gewebe vor, wobei in der Größenordnung von 10 bis 15 Schussfäden 10 pro cm der Länge des Gurtbandes 1 vorgesehen sein können.

## Patentansprüche

1. Gurtband (1) für eine Sicherheitsgurteinrichtung eines Kraftfahrzeuges mit
- wenigstens einem Hohlraum (5) zur Aufnahme von elektronischen Bauteilen und/oder Leitungen (13),
- der Hohlraum (5) durch zwei Gewebelagen (6,7) gebildet ist, welche in den äußeren Randabschnitten (3,4) durch einen oder mehrere parallel zu der Längsrichtung des Gurtbandes verlaufenden Bindungsfaden/verlaufende Bindungsfäden (12) miteinander verbunden sind, und
- die Gewebelagen (6,7) durch eine Vielzahl von Kettfäden (11) und Schussfäden (10) gebildet sind
**dadurch gekennzeichnet, dass**
- die Kettfäden (11) in einer 5/1/1-Bindung mit den Schussfäden (10) verbunden sind.

2. Gurtband (1) nach Anspruch 1, **dadurch gekennzeichnet, dass**
- das Gurtband (1) eine Breite (A) von 40 bis 50 mm, bevorzugt von 46 oder 47 mm aufweist, und die Randabschnitte (3,4), in denen die Gewebelagen (6,7) durch die Bindungsfäden (12) miteinander verbunden sind, eine Breite (B) von jeweils wenigstens 2 mm, bevorzugt von wenigstens 4 mm aufweisen.

3. Gurtband (1) nach Anspruch 1 oder 2, **dadurch gekennzeichnet, dass**
- der Bindungsfaden (12) in einer 2/2-Bindung mit den Schussfäden (10) der beiden Gewebelagen (6,7) verwebt ist.

4. Gurtband (1) nach einem der vorangegangenen Ansprüche,
**dadurch gekennzeichnet, dass**
- die beiden Gewebelagen (6,7) in einem oder mehreren zwischen den Randabschnitten (3,4) angeordneten Verbindungsabschnitten unter Bildung von zwei oder mehr voneinander getrennten Hohlräumen (5) miteinander verbunden sind.

5. Gurtband (1) nach einem der vorangegangenen Ansprüche, **dadurch gekennzeichnet, dass**
- in dem Hohlraum (5) wenigstens ein elektrischer Leiter (13) und/oder ein elektronisches Bauteil angeordnet ist.

## Claims

1. Belt strap (1) for a safety belt device of a motor vehicle, comprising
- at least one cavity (5) for receiving electronic components and/or leads (13),
- the cavity (5) being formed by two fabric layers (6, 7) which are interconnected in the outer edge portions (3, 4) by one or more binding threads (12) which extend in parallel with the longitudinal direction of the belt strap, and
- the fabric layers (6, 7) being formed by a plurality of warp threads (11) and weft threads (10),
**characterized in that**
- the warp threads (11) are connected to the weft threads (10) in a 5/1/1 weave.

2. Belt strap (1) according to claim 1, **characterized in that**
- the belt strap (1) has a width (A) of from 40 to 50 mm, preferably of 46 or 47 mm, and the edge portions (3, 4), in which the fabric layers (6, 7) are interconnected by the binding threads (12), each have a width (B) of at least 2 mm, preferably at least 4 mm.

3. Belt strap (1) according to either claim 1 or claim 2, **characterized in that**
- the binding thread (12) is woven in a 2/2 weave with the weft threads (10) of the two fabric layers (6, 7).

4. Belt strap (1) according to any of the preceding claims, **characterized in that**
- the two fabric layers (6, 7) are interconnected in one or more connecting portions arranged between the edge portions (3, 4), so as to form two or more cavities (5) which are separate from one another.

5. Belt strap (1) according to any of the preceding claims, **characterized in that**
- at least one electrical conductor (13) and/or an electronic component is arranged in the cavity (5).

## Revendications

1. Sangle de ceinture (1) pour un dispositif de ceinture de sécurité d'un véhicule automobile comportant
- au moins une cavité (5) permettant de loger des composants électroniques et/ou des câbles (13),
- la cavité (5) est formée par deux couches de tissu (6, 7), lesquelles sont reliées l'une à l'autre dans les sections de bord (3, 4) extérieures par au moins un fil d'armure (12) s'étendant parallèlement à la direction longitudinale de la sangle de ceinture, et
- les couches de tissu (6, 7) sont formées par une pluralité de fils de chaîne (11) et de fils de trame (10)
**caractérisée en ce que**
- les fils de chaîne (11) sont reliés aux fils de trame (10) selon une armure 5/1/1.

2. Sangle de ceinture (1) selon la revendication 1, **caractérisée en ce que**
- ladite sangle de ceinture (1) présente une largeur (A) de 40 à 50 mm, de préférence de 46 ou de 47 mm, et les sections de bord (3, 4), dans lesquelles les couches de tissu (6, 7) sont reliées l'une à l'autre par les fils d'armure (12), présentent une largeur (B) de respectivement au moins 2 mm, de préférence d'au moins 4 mm.

3. Sangle de ceinture (1) selon la revendication 1 ou 2, **caractérisée en ce que**
- le fil d'armure (12) est tissé selon une armure 2/2 avec les fils de trame (10) des deux couches de tissu (6, 7).

4. Sangle de ceinture (1) selon l'une quelconque des revendications précédentes, **caractérisée en ce que**
- les deux couches de tissu (6, 7) sont reliées l'une à l'autre dans au moins une section de liaison disposée entre les sections de bord (3, 4) pour obtenir au moins deux cavités (5) séparées les unes des autres.

5. Sangle de ceinture (1) selon l'une quelconque des revendications précédentes, **caractérisée en ce que**
- au moins un conducteur électrique (13) et/ou un composant électronique est disposé dans la cavité (5).
